(19) Europäisches Patentamt
European Patent Office
Office européen des brevets

(11) **EP 1 065 797 B1**

(12) **FASCICULE DE BREVET EUROPEEN**

(45) Date de publication et mention
de la délivrance du brevet:
**01.08.2007   Bulletin 2007/31**

(51) Int Cl.:
***H04B 1/707*** *(2006.01)*

(21) Numéro de dépôt: **00401857.8**

(22) Date de dépôt: **29.06.2000**

(54) **Récepteur AMRC à suppression parallèle d'interférences et à synchronisation optimisée**

CDMA-Empfänger mit paralleler Interferenzunterdrückung und optimierter Synchronisation

CDMA receiver with parallel interference suppression and optimized synchronisation

(84) Etats contractants désignés:
**DE GB IT**

(30) Priorité:  **01.07.1999   FR 9908476**

(43) Date de publication de la demande:
**03.01.2001   Bulletin 2001/01**

(73) Titulaire: **Commissariat à l'Energie Atomique**
**75015 Paris (FR)**

(72) Inventeurs:
 • **Ouvry, Laurent**
 **38100 Grenoble (FR)**
 • **Varreau, Disier**
 **38450 St Georges de Commiers (FR)**
 • **Lattard, Didier**
 **38680 Rencurel (FR)**
 • **Leveque, Sébastien**
 **38000 Grenoble (FR)**

(74) Mandataire: **Viering, Hans-Martin et al**
**Viering, Jentschura & Partner**
**Patent- und Rechtsanwälte**
**Postfach 22 14 43**
**80504 München (DE)**

(56) Documents cités:
**FR-A- 2 770 060           US-A- 5 719 852**

## Description

### Domaine technique

La présente invention a pour objet un récepteur AMRC ("Accès Multiple à Répartition par les Codes" ou en anglais, "CDMA" pour "Code Division Multiple Access") à suppression parallèle d'interférences et à synchronisation optimisée.

Plus généralement, l'invention se rapporte à la transmission numérique à étalement de spectre par séquence directe (en abrégé DSSS pour "Direct Séquence Spread Spectrum").

L'invention trouve des applications dans les systèmes de radiocommunications avec les mobiles, dans les réseaux locaux sans fil (WLAN : "Wireless Local Area Network"), dans les boucles locales d'abonnés sans fil (WLL "Wireless Local Loop"), dans la télévision câblée et les services multimédia sur le câble, dans la domotique et la télécollecte, ...

### Etat de la technique antérieure

L'étalement de spectre par séquence directe consiste à moduler chaque symbole d'un signal numérique par une séquence binaire pseudo-aléatoire. Une telle séquence est composée de N impulsions ou "chips" dont la durée Tc est égale à Ts/N. Le signal modulé présente un spectre qui s'étale sur une plage N fois plus large que celui du signal original. A la réception, la démodulation consiste à corréler le signal avec la séquence utilisée à l'émission, ce qui permet de retrouver l'information liée au symbole de départ.

Les avantages de cette technique sont nombreux :

- ■ discrétion, puisque la densité spectrale de puissance du signal est réduite d'un facteur N ;
- ■ immunité vis-à-vis des émissions à bande étroite, volontaires ou parasites, puisque l'opération de corrélation réalisée au niveau du récepteur conduit à l'étalement spectral de ces émissions ;
- ■ interception difficile puisque la démodulation requiert la connaissance de la séquence utilisée à l'émission ;
- ■ résistance aux trajets multiples qui, sous certaines conditions, provoquent des évanouissements sélectifs en fréquence et donc n'affectent pas partiellement le signal émis ;
- ■ accès multiple possible par affection de différentes séquences à différents utilisateurs.

La technique de modulation à étalement de spectre par séquence directe est largement décrite dans la littérature spécialisée. On peut citer, par exemple, les ouvrages suivants :

- "CDMA Principles of Spread Spectrum Communication", par Andrew J. VITERBI, Addison-Wesley Wireless Communication Séries ;

- "Spread Spectrum Communications", par Marvin K. SIMON et al., vol. I, 1983, Computer Science Press ;

- "Spread Spectrum Systems", par R.C. DIXON, John WILEY and Sons.

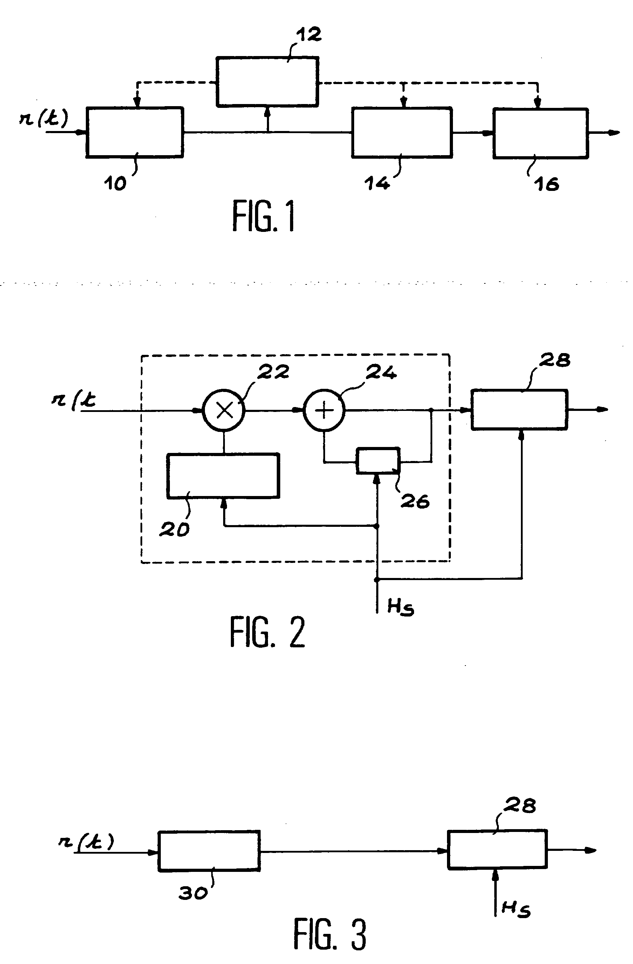

La figure 1 annexée illustre le principe d'un récepteur de signal à étalement de spectre. Le récepteur représenté reçoit un signal r(t) et comprend un premier circuit 10, appelé par la suite moyen de corrélation, et qui peut être un filtre adapté ou un corrélateur glissant, un circuit 12 de récupération d'un signal d'horloge symbole, signal qui permet la synchronisation des moyens du récepteur, éventuellement un circuit de traitement 14 apte à effectuer différents traitements supplémentaires, comme par exemple une multiplication retardée, une estimation de canal, etc..., et enfin un circuit 16 apte à prendre une décision sur la valeur du symbole transmis.

Le premier circuit de ce récepteur (moyen de corrélation 10), qu'il s'agisse d'un corrélateur glissant ou d'un filtre adapté, joue un rôle important qui peut être précisé à l'aide des figures 2 et 3.

Un corrélateur glissant (figure 2) comprend schématiquement un générateur de séquence pseudo-aléatoire 20 et un multiplieur 22 recevant le signal d'entrée r(t) et la séquence délivrée par le générateur 20, un additionneur 24, un circuit 26 relié à la sortie de l'additionneur 24 et rebouclé sur celui-ci et réalisant un retard. La sortie du corrélateur glissant est reliée à un sous-échantillonneur 28. Les circuits 20, 26, 28 sont commandés par un signal d'horloge symbole Hs.

Quant au filtre adapté (figure 3), il s'agit en général d'un filtre numérique 30 dont les coefficients sont adaptés à la séquence utilisée. Ce filtre reçoit le signal d'entrée r(t) et délivre un signal filtré appliqué encore à un sous-échantillonneur 28. Ce dernier est commandé par le signal d'horloge symbole Hs.

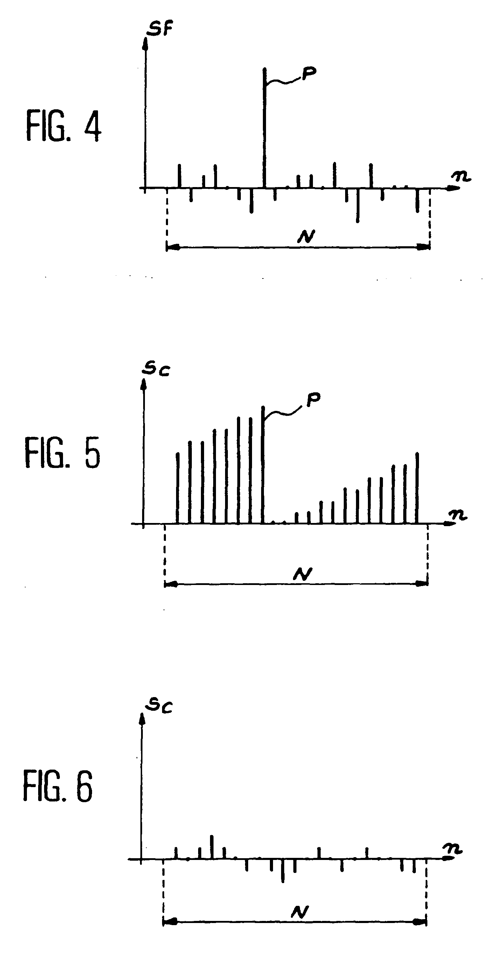

Vues de la sortie du sous-échantillonneur 28, ces deux architectures sont équivalentes. En revanche, vues de l'entrée du sous-échantillonneur 28, elles sont différentes puisqu'elles ne délivrent pas le même signal, comme le montrent les figures 4, 5 et 6.

La figure 4, tout d'abord, montre la sortie Sf du filtre numérique adapté de la figure 3, en fonction du rang n des échantillons ; la figure 5 la sortie Sc du corrélateur glissant de la figure 5 lorsque la réplique locale de la séquence émise est alignée avec la séquence émise ; et la figure 6 la sortie Sc de ce même corrélateur glissant lorsque la réplique locale de la séquence n'est pas alignée avec la séquence émise. Le pic de corrélation portant l'information sur le symbole est marquée P sur les figures 4 et 5.

On voit bien, d'après ces figures, que le corrélateur glissant a besoin d'une information liée au rythme des symboles, signal dit "horloge symbole" et noté Hs, pour que la réplique locale de la séquence soit alignée avec la séquence modulant les symboles reçus, sinon la démodulation des symboles est impossible (cas de la figure 6). Le filtre adapté, lui, ne requiert pas cette information. Ainsi, ce qui différencie en premier lieu une structure à corrélateur glissant et une structure à filtre adapté, c'est que la première a besoin d'une information externe de synchronisation.

Un filtre adapté permet la récupération de l'horloge symbole, par exemple par une détection récurrente du pic de corrélation sur une fenêtre de N points (figure 4). La récupération de l'horloge symbole est également possible à l'aide d'un corrélateur glissant, mais de manière plus complexe : il faut modifier pas à pas la phase de la réplique locale de la séquence jusqu'à ce que la sortie du corrélateur glissant corresponde à un maximum d'énergie, donc à un pic de corrélation (cas de la figure 5).

Si ces deux structures permettent de retrouver l'horloge symbole, elles ne le font pas avec la même vitesse : l'opération de récupération de l'horloge symbole dure au maximum N périodes symbole, c'est-à-dire NTs avec un corrélateur glissant, alors qu'elle ne demande qu'une seule période symbole Ts avec un filtre adapté.

L'avantage du filtre adapté est donc évident en terme de rapidité d'acquisition du signal d'horloge symbole. Son inconvénient est sa complexité opératoire, puisque son implantation sous forme de filtre numérique à réponse impulsionnelle finie (travaillant à la cadence des chips multipliée par le nombre d'échantillons) requiert N multiplications et N additions pour chaque échantillon. Sa complexité structurelle va de pair avec sa complexité opératoire.

Le corrélateur glissant n'effectue, lui, qu'une multiplication et qu'une addition pour chaque nouvel échantillon. S'il est relativement mal adapté à la récupération de l'horloge, il est en revanche très avantageux en terme de complexité opératoire.

La technique AMRC (ou CDMA en anglais) peut être de deux types. Si les différents émetteurs des utilisateurs n'ont pas de référence commune de temps, le système est dit asynchrone puisque les débuts des symboles propres à chaque utilisateur parviennent au récepteur à des instants différents. On peut, aussi, faire en sorte que les débuts des symboles reçus des différents utilisateurs coïncident (modulo la période Ts d'un symbole). Le système est alors dit "synchrone". Les systèmes asynchrones possèdent le gros avantage de ne pas nécessiter de signal extérieur de synchronisation contrairement aux systèmes synchrones, mais c'est au détriment de contraintes plus fortes sur les propriétés des séquences d'étalement.

En effet, dans un système AMRC asynchrone, les séquences possèdent des phases relatives quelconques au niveau de la réception. Une bonne séparation des signaux suppose donc que les intercorrélations entre séquences soient faibles, quelles que soient les phases relatives entre les séquences.

Si l'on désigne par $g_i(t)$ et $g_k(t)$ deux séquences pseudo-aléatoires affectées à des utilisateurs i et k, on peut définir un coefficient $\mu_{i,k}$ traduisant la corrélation entre ces deux séquences. Ce coefficient est égal à la moyenne, sur la durée Ts d'un symbole, du produit des séquences, soit :

$$\mu_{i,k} = \frac{1}{Ts} \int_0^{T_s} g_i(t) g_k(t) dt.$$

Ce coefficient représente une autocorrélation si i=k et une intercorrélation si i≠k.

Le signal à la sortie du corrélateur correspondant à l'utilisateur de rang k (c'est-à-dire après le sous-échantillonneur 28 de la figure 2) peut s'écrire, en fonction de ce coefficient :

$$A_k d_k + \sum_{\substack{i=0 \\ i \neq k}}^{K-1} \mu_{i,k} A_i d_i + \frac{1}{Ts} \int_0^{Ts} n(t) . g_k(t) . dt$$

où $A_k$ est l'amplitude du signal propre à l'utilisateur de rang k, gk(t) la séquence pseudo-aléatoire propre à cet utilisateur, $d_i$ la donnée transmise et n(t) un bruit blanc additif gaussien. Dans cette expression, l'indice i va de 0 à K-1, K étant le nombre total d'utilisateurs, mais sans prendre la valeur k propre à l'utilisateur considéré.

Le premier terme, soit $A_k d_k$ permet de retrouver la donnée $d_k$ ; le deuxième correspond à une corrélation avec les signaux correspondant aux autres utilisateurs. Ce terme est appelé "interférence d'accès multiple" ou IAM en abrégé (MAI en anglais pour "Multiple Access Interference").

L'existence de cette interférence d'accès multiple entraîne une conséquence non négligeable sur la capacité du système de transmission, c'est-à-dire sur le nombre d'utilisateurs simultanés acceptables, et sur les performances du système.

De nombreux travaux ont été entrepris pour tenter de réduire ce phénomène d'interférence. On peut citer :

- des travaux sur les séquences d'étalement pseudo-aléatoires,

- des travaux sur la gestion des puissances des différents émetteurs,

- la mise en oeuvre d'antennes adaptatives,

- des travaux sur des structures de récepteur plus performantes.

Ces derniers travaux ont notamment porté sur la recherche de structures de récepteur dites "sous-optimales", qui, contrairement à une structure optimale, réalisent un bon compromis entre performances et complexité opératoire. Parmi celles-ci, les structures à suppression parallèle d'interférences présentent de l'intérêt et l'on va rappeler en quoi elles consistent.

Un récepteur à suppression parallèle d'interférences utilise en général :

- un premier étage fondé sur un détecteur classique avec une banque de moyens de corrélation,

- des moyens de génération d'un signal d'interférence,

- des moyens de suppression dans le signal reçu des interférences engendrées par les autres utilisateurs du système,

- un dernier étage d'estimation des données finales.

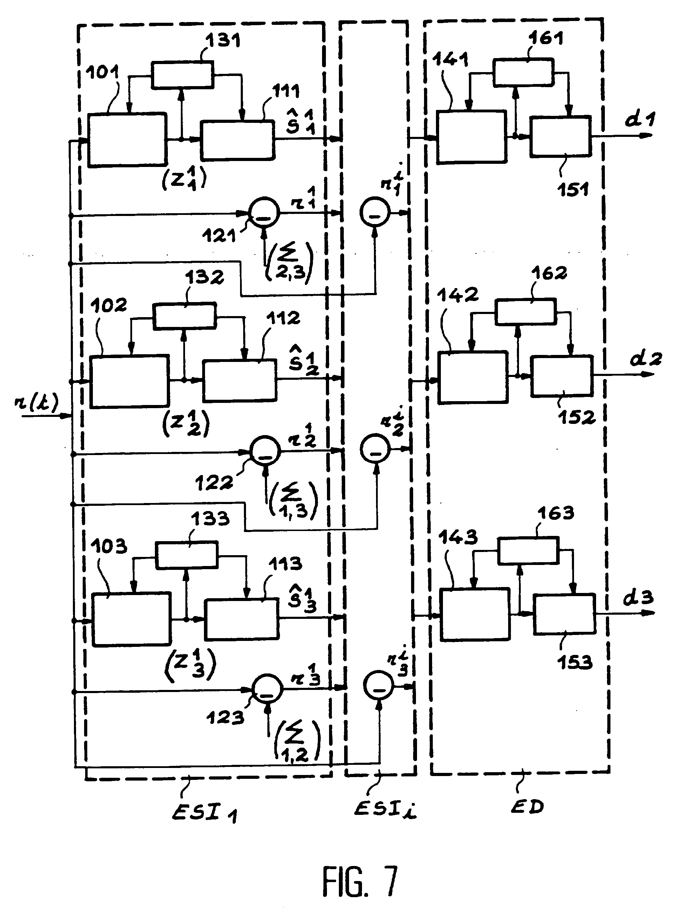

Une telle technique est décrite dans l'article de R.M. BUEHRER et al. intitulé "Analysis of DS-CDMA Parallel Interference Cancellation with Phase and Timing Errors", publié dans "IEEE Journal of Selected Areas in Communications", vol. 14, n˚8, Octobre 1996, pp. 1522-1535. Le récepteur correspondant est illustré sur la figure 7 annexée, dans le cas de trois utilisateurs. Le signal de réception r(t) est traité dans un premier étage de suppression d'interférence $ESI_1$ constitué de trois moyens de corrélation 101, 102, 103 utilisateurs. Ces moyens de corrélation délivrent trois signaux de décision

$$Z_1^1, Z_2^1, Z_3^1$$ qui sont traités dans trois circuits d'estimation des interférences 111, 112, 113. Ces derniers délivrent des signaux $$\hat{S}_1^1, \hat{S}_2^1, \hat{S}_3^1$$ qui sont obtenus par étalement des signaux Z par les séquences pseudo-aléatoires des trois utilisateurs. Pour chaque utilisateur, les signaux $\hat{S}$ des autres utilisateurs sont sommés, soit respectivement $\sum_{2,3}$ pour l'utilisateur 1, $\sum_{1,3}$ pour l'utilisateur 2 et $\sum_{1,2}$ pour l'utilisateur 3. Ces sommes sont soustraites du signal de réception r(t) dans trois soustracteurs 121, 122, 123, pour obtenir trois nouveaux signaux $r_1^1$, $r_2^1$, $r_3^1$.

Les signaux $r_1^1$, $r_2^1$, $r_3^1$ peuvent à leur tour être traités dans un deuxième étage de suppression d'interférences et ainsi de suite, jusqu'à un $i^{\text{ème}}$ étage de suppression d'interférence $ESI_i$. En effet, débarrassés au moins en partie du bruit d'accès multiple, les signaux $r_1^1$, $r_2^1$, $r_3^1$ permettent de mieux estimer l'interférence à soustraire au signal reçu r(t). Dans l'étage de rang i, soit $ESI_i$, on n'a représenté que les soustracteurs avec les signaux $r_1^i$, $r_2^i$ et $r_3^i$.

Le récepteur comprend enfin un dernier étage, ED, dit de décision, avec trois voies contenant des moyens de corrélation 141, 142, 143 et trois circuits de décision 151, 152, 153 délivrant les données $d_1, d_2, d_3$.

Dans chaque étage, il existe des moyens de synchronisation pour la commande des divers circuits. Dans le premier étage ESI1, on trouve ainsi des circuits de synchronisation 131, 132, 133 commandant les moyens de corrélation 101, 102, 103, et les moyens d'estimation 111, 112, 113. Dans le dernier étage ED, on trouve des moyens de synchronisation 161, 162, 163 commandant les moyens de corrélation 141, 142, 143 et les moyens de décision 151, 152, 153.

D'une manière générale, pour construire un signal de correction d'interférences d'accès multiple, on a besoin de trois informations :

1) une horloge symbole (Hs),
2) les amplitudes, et
3) les signes des signaux véhiculés sur les voies I et Q, après corrélation, soit A(I) et A(Q).

Toutes ces informations sont calculées ou relevées à chaque étage, pour la commande de cet étage et indépendamment de ce qui se passe dans les autres étages.

Cette disposition, si elle permet un fonctionnement correct du récepteur, est cependant assez lourde. L'invention remédie à cet inconvénient en proposant une structure plus simple et qui permet en outre de tirer un meilleur parti des performances des moyens de corrélation.

**Exposé de l'invention**

On se place dans le cas d'un système à étalement de spectre par séquence directe et à plusieurs émetteurs éventuellement asynchrones. Au niveau d'un récepteur à suppression parallèle d'interférences, le ou les pics de corrélation correspondant aux différents trajets de propagation du signal de l'utilisateur k, sont placés exactement aux mêmes endroits dans la fenêtre symbole, quel que soit l'étage de suppression considéré, pour un symbole donné. En effet, le signal reçu contient les répliques du signal émis par l'utilisateur k associées aux trajets de propagation, à une place figée, pour un symbole donné, dans la fenêtre symbole. Les positions temporelles sont estimées dans le moyen de synchronisation et peuvent sans doute être considérées comme différentes d'un étage à l'autre, puisque le signal est progressivement épuré des interférences au fil des étages de suppression. Mais l'information reçue ne se déplace pas relativement à la fenêtre du symbole considéré. Ainsi, un seul signal de synchronisation par trajet est suffisant et non un par trajet et par étage.

Ces réflexions ont amené le Demandeur à proposer d'utiliser le/les signaux de synchronisation calculés dans le dernier étage du récepteur, signaux les moins entachés d'erreur, pour piloter tous les étages de suppression d'interférences, pour chaque utilisateur.

L'invention permet ainsi de s'affranchir des calculs lourds de recherche de signaux d'horloge à tous les premiers étages et diminue ainsi considérablement la complexité opératoire du récepteur. Cette complexité peut encore être réduite par l'emploi de corrélateurs glissants dans les premiers étages et de filtres adaptés dans le dernier. Comme il a été expliqué plus haut, le filtre adapté permet d'acquérir la synchronisation en une seule période symbole alors que l'utilisation de corrélateurs glissants permet de réduire la complexité opératoire, sans dégrader ce temps d'acquisition.

De façon précise la présente invention a pour objet un récepteur pour transmission à accès multiple à répartition par les codes et à suppression parallèle d'interférences d'accès multiple, comprenant :

- au moins un étage de suppression d'interférences d'accès multiple constitué par K voies comprenant chacune un moyen de corrélation correspondant à une séquence pseudo-aléatoire particulière et des moyens de génération et de suppression des interférences, chaque étage délivrant à l'étage suivant K signaux débarrassés au moins en partie des interférences d'accès multiple,
- un dernier étage, de décision, constitué par K voies recevant les K signaux provenant des K voies de l'étage de suppression précédent et comprenant chacune un moyen de corrélation correspondant à l'une des séquences pseudo-aléatoires et des moyens de décision délivrant une donnée,
- des moyens pour produire des signaux de synchronisation aptes à commander les moyens de suppression d'interférences,
- des moyens pour produire des signaux de synchronisation aptes à commander les moyens de décision du dernier étage,

ce récepteur étant caractérisé en ce que les moyens pour produire les signaux de synchronisation sont constitués par K moyens disposés uniquement dans les K voies du dernier étage, les K signaux de synchronisation produits par ces K moyens commandant les K moyens de décision des K voies du dernier étage et les moyens d'estimation des interférences des K voies des étages de suppression d'interférences, après des décalages temporels appropriés.

De préférence, les K signaux de synchronisation commandent aussi les K moyens de corrélation.

De préférence encore, les K moyens de corrélation des K voies du dernier étage, sont constitués par K filtres adaptés à K séquences pseudo-aléatoires, et les K moyens de corrélation des K voies de chaque étage de suppression d'interférences sont constitués par K corrélateurs glissants.

## Brève description des dessins

- la figure 1, déjà décrite, représente un récepteur connu à étalement de spectre ;
- la figure 2, déjà décrite, montre un corrélateur glissant ;
- la figure 3, déjà décrite, montre un filtre adapté ;
- la figure 4, déjà décrite, montre le signal de sortie d'un filtre adapté ;
- la figure 5, déjà décrite, montre le signal de sortie d'un corrélateur glissant lorsque la réplique locale de la séquence est alignée avec la séquence émise ;
- la figure 6, déjà décrite, montre ce même signal de sortie lorsque la réplique locale n'est pas alignée avec la séquence émise ;
- la figure 7, déjà décrite, montre un récepteur AMRC avec suppression d'interférences d'accès multiple selon l'art antérieur ;
- la figure 8 montre un récepteur conforme à l'invention.

## Description de modes particuliers de réalisation

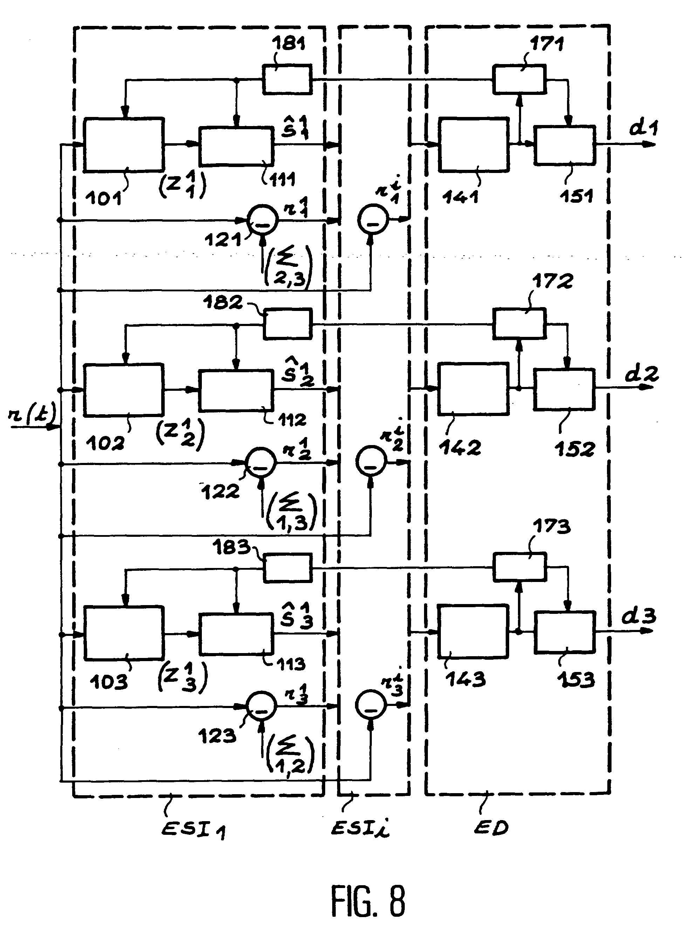

La figure 8 illustre un mode particulier de réalisation d'un récepteur conforme à l'invention. Cette figure correspond à la figure 7 et les mêmes moyens portent les mêmes références. Il va de soi que l'invention n'est pas limitée à 3 voies, mais qu'elle s'étend à K voies, K étant quelconque. Par ailleurs, le nombre i des étages de suppression d'interférences d'accès multiple est lui aussi quelconque.

Sur la figure 8, les moyens de synchronisation sont constitués par les trois moyens 171, 172, 173, disposés dans l'étage de décision ED, ces moyens étant utilisés non seulement dans les voies du dernier étage, mais également dans les étages de suppression d'interférences comme l'étage $ESI_1$, où les signaux délivrés par les moyens 171, 172, 173 sont appliqués aux moyens de corrélation 101, 102, 103 et aux circuits d'estimation 111, 112, 113, après un décalage temporel approprié apporté par les circuits 181, 182, 183, comprenant, modulo la période symbole, le temps de traitement.

Par ailleurs, les moyens de corrélation 141, 142, 143 du dernier étage sont avantageusement des filtres adaptés, qui permettent d'acquérir la synchronisation en une seule période symbole, alors que les moyens de corrélation 101, 102, 103 des étages de suppression d'interférences sont des corrélateurs glissants, ce qui réduit la complexité sans dégrader le temps d'acquisition.

## Revendications

1. Récepteur pour transmission à accès multiple à répartition par les codes et à suppression parallèle d'interférences d'accès multiple, comprenant :

   - au moins un étage de suppression d'interférences d'accès multiple (ESI$_i$) constitué par K voies comprenant chacune un moyen de corrélation (101, 102, 103) correspondant à une séquence pseudo-aléatoire particulière et des moyens de génération (111, 112, 113) et de suppression (121, 122, 123) des interférences, chaque étage délivrant à l'étage suivant K signaux

   $(r_1^i, \quad r_2^i, \quad r_3^i)$ débarrassés au moins

   en partie des interférences d'accès multiple,
   - un dernier étage (ED), de décision, constitué par K voies recevant les K signaux provenant des K voies de l'étage de suppression précédent et comprenant chacune un moyen de corrélation (141, 142, 143) correspondant à l'une des séquences pseudo-aléatoires et des moyens de décision (151, 152, 153) délivrant une donnée (d$_1$, d$_2$, d$_3$),
   - des moyens (131, 132, 133) pour produire des signaux de synchronisation aptes à commander les moyens de suppression d'interférences,
   - des moyens (161, 162, 163) pour produire des signaux de synchronisation aptes à commander les moyens de décision (151, 152, 153) du dernier étage (ED),

   ce récepteur étant **caractérisé en ce que** les moyens pour produire les signaux de synchronisation sont constitués par K moyens (171, 172, 173) disposés uniquement dans les K voies du dernier étage (ED), les K signaux de synchronisation produits par ces K moyens commandant les K moyens de décision (151, 152, 153) des K voies du dernier étage (ED) et les moyens d'estimation des interférences (111, 112, 113) des K voies des étages de suppression d'interférences (ESI$_i$), après des décalages temporels appropriés (181, 182, 183).

2. Récepteur selon la revendication 1, dans lequel les K signaux de synchronisation commandent aussi les K moyens de corrélation (101, 102, 103).

3. Récepteur selon la revendication 1, dans lequel les K moyens de corrélation (141, 142, 143) des K voies du dernier étage (ED) sont constitués par K filtres adaptés à K séquences pseudo-aléatoires, et les K moyens de corrélation (101, 102, 103) des K voies de chaque étage de suppression d'interférences (ESI$_1$) sont constitués par K corrélateurs glissants.

## Claims

1. Receiver for code distribution multiple access transmission and parallel multiple access interference suppression, comprising:

   - at least one multiple access interference suppression stage (ESI$_i$), constituted by K channels, each comprising a correlation means (101, 102, 103) corresponding to a particular pseudorandom sequence, and interference generating means (111, 112, 113) and interference suppression means (121, 122, 123), each stage delivering to the following stage K signals

   $(r_1^i, r_2^i, r_3^i)$ at least in part freed from multiple access interferences,
   - a final decision stage (ED) constituted by K channels receiving the K signals from the K channels of the preceding suppression stage and each comprising a correlation means (141, 142, 143) corresponding to one of the pseudorandom sequences and decision means (151, 152, 153) delivering a data item (d$_1$, d$_2$, d$_3$),
   - means (131, 132, 133) for producing synchronisation signals able to control the interference suppression means,
   - means (161, 162, 163) for producing synchronisation signals able to control the decision means (151, 152, 153) of the final stage (ED),

   said receiver being **characterised in that** the means for producing the synchronisation signals are constituted by K means (171, 172, 173) solely placed in the K channels of the final stage (ED), the K synchronisation signals produced by said K means controlling the K decision means (151, 152, 153) of the K channels of the final stage (ED) and the interference estimation means (111, 112, 113) of the K channels of the interference suppression stages (ESI$_i$) following appropriate time shifts (181, 182, 183).

2. Receiver according to claim 1, wherein the K synchronisation signals also control the K correlation means (101, 102, 103).

3. Receiver according to claim 1, wherein the K correlation means (141, 142, 143) of the K channels of the final stage (ED) are constituted by K filters matched with K pseudorandom sequences, and the K correlation means (101, 102, 103) of the K channels of each interference suppression stage (ESI$_1$) are constituted by K sliding correlators.

**Patentansprüche**

1. Empfänger für die Übertragung mittels Mehrfachzugriff durch Codeteilung und paralleler Mehrfachzugriffsinterferenzunterdrückung, aufweisend:

   - mindestens eine Stufe zur Unterdrückung von Mehrfachzugriffsinterferenzen (ESI$_i$), die aus K Wegen gebildet ist, die jeweils ein einer bestimmten Pseudozufallssequenz entsprechendes Korrelationsmittel (101, 102, 103) und Mittel zur Generierung (111, 112, 113) und zur Unterdrückung (121, 122, 123) der Interferenzen aufweisen, wobei jede Stufe an die folgende Stufe K Signale ($r_1^i$, $r_2^i$, $r_3^i$) ausgibt, die zumindest teilweise von den Mehrfachzugriffsinterferenzen befreit sind,
   - eine letzte Entscheidungsstufe (ED), die aus K Wegen gebildet ist, die die K Signale empfangen, die von den K Wegen der vorhergehenden Unterdrückungsstufe kommen, und die jeweils ein einer der Pseudozufallssequenzen entsprechendes Korrelationsmittel (141, 142, 143) sowie eine Information (d$_1$, d$_2$, d$_3$) ausgebende Entscheidungsmittel (151, 152, 153) aufweisen,
   - Mittel (131, 132, 133) zur Erzeugung von Synchronisationssignalen, die fähig sind, die Mittel zur Interferenzunterdrückung zu steuern,
   - Mittel (161, 162, 163) zur Erzeugung von Synchronisationssignalen, die fähig sind, die Entscheidungsmittel (151, 152, 153) der letzten Stufe (ED) zu steuern,

   wobei dieser Empfänger **dadurch gekennzeichnet ist, dass** die Mittel zur Erzeugung der Synchronisationssignale aus K Mitteln (171, 172, 173) gebildet sind, die ausschließlich in den K Wegen der letzten Stufe (ED) angeordnet sind, wobei die durch diese K Mittel erzeugten K Synchronisationssignale die K Entscheidungsmittel (151, 152, 153) der K Wege der letzten Stufe (ED) und die Mittel zur Schätzung der Interferenzen (111, 112, 113) der K Wege der Interferenzunterdrückungsstufen (ESI$_i$) nach entsprechenden zeitlichen Verschiebungen (181, 182, 183) steuern.

2. Empfänger nach Anspruch 1, bei dem die K Synchronisationssignale auch die K Korrelationsmittel (101, 102, 103) steuern.

3. Empfänger nach Anspruch 1, bei dem die K Korrelationsmittel (141, 142, 143) der K Wege der letzten Stufe (ED) aus K Filtern gebildet sind, die an K Pseudozufallssequenzen angepasst sind, und die K Korrelationsmittel (101, 102, 103) der K Wege jeder Interferenzunterdrückungsstufe (ESI$_1$) aus K gleiten-

den Korrelatoren gebildet sind.

FIG. 1

FIG. 2

FIG. 3

FIG. 4

FIG. 5

FIG. 6

FIG. 7

FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ANDREW J. VITERBI.** CDMA Principles of Spread Spectrum Communication. *Addison-Wesley Wireless Communication Séries*
- **MARVIN K. SIMON et al.** Spread Spectrum Communications. Computer Science Press, 1983, vol. I

- **R.C. DIXON.** Spread Spectrum Systems. John WILEY and Sons
- **R.M. BUEHRER et al.** Analysis of DS-CDMA Parallel Interference Cancellation with Phase and Timing Errors. *IEEE Journal of Selected Areas in Communications,* Octobre 1996, vol. 14 (8), 1522-1535